Europäisches Patentamt

European Patent Office

Office européen des brevets

(19)

(11) Veröffentlichungsnummer : **0 393 179 B1**

(12) **EUROPÄISCHE PATENTSCHRIFT**

(45) Veröffentlichungstag der Patentschrift :
22.07.92 Patentblatt 92/30

(51) Int. Cl.$^5$ : **F01K 17/06,** F26B 23/00,
F26B 3/084

(21) Anmeldenummer : **89911022.5**

(22) Anmeldetag : **12.10.89**

(86) Internationale Anmeldenummer :
**PCT/DE89/00650**

(87) Internationale Veröffentlichungsnummer :
**WO 90/04702 03.05.90 Gazette 90/10**

(54) **VERFAHREN ZUR ERZEUGUNG ELEKTRISCHER ENERGIE UND/ODER HEIZ- UND PROZESSWÄRME.**

(30) Priorität : **18.10.88 DE 3835428
18.10.88 DE 3835427**

(43) Veröffentlichungstag der Anmeldung :
**24.10.90 Patentblatt 90/43**

(45) Bekanntmachung des Hinweises auf die
Patenterteilung :
**22.07.92 Patentblatt 92/30**

(84) Benannte Vertragsstaaten :
**AT BE CH DE FR GB IT LI LU NL SE**

(56) Entgegenhaltungen :
**EP-A- 307 744
WO-A-88/10359
AT-B- 345 679
DE-A- 2 929 486
DE-A-29 236 14
DE-A-37 317 20
DE-B- 1 053 526
DE-B- 1 072 953
GB-A- 2 052 708
US-A- 4 615 122
US-A- 4 627 173**

(73) Patentinhaber : **Saarberg-Interplan,
Gesellschaft für Rohstoff-, Energie- und
Ingenieurtechnik mbH
Malstatter Markt 13
W-6600 Saarbrücken (DE)**
Patentinhaber : **ORGREB-INSTITUT FÜR
KRAFTWERKE
DD-7544 Vetschau (DE)**

(72) Erfinder : **SPLIETHOFF, Heinz
Warken-Ecksteinstrasse 3
W-6605 Friedrichsthal (DE)**
Erfinder : **MÖLLER, Burkhard
Feuerbachstrasse 20
DR-8020 Dresden (DE)**
Erfinder : **WOLF, Bodo
Forstweg 9
DR-8210 Freital (DE)**

(74) Vertreter : **Schulte, Jörg, Dipl.-Ing.
Hauptstrasse 2
W-4300 Essen-Kettwig (DE)**

EP 0 393 179 B1

## Beschreibung

Die Erfindung betrifft ein Verfahren zur Erzeugung elektrischer Energie und/oder Heiz- und Prozeßwärme durch Nutzung der Verbrennungswärme von fossilen, vor der Verbrennung in einem indirekt beheizten Wirbelbetttrockner getrockneten Brennstoffen, insbesondere von Rohbraunkohle, wobei die anfallenden Rauchgase im Wärmetausch mit Arbeitsmittel und Verbrennungsluft auf ein Zwischentemperaturniveau abgekühlt, entstaubt, ggf. von weiteren Schadstoffen befreit und dann in die Atmosphäre abgegeben werden.

In Kraftwerken, in denen fossile Brennstoffe mit hohem Feuchtegehalt, beispielsweise Rohbraunkohle mit einem Wassergehalt von 50 % und mehr, zum Einsatz kommen, muß ein erheblicher Teil, nämlich bis zu 25 %, des eingesetzten Brennstoffes für die Verdampfung des Wassers verwendet werden, welches dann als Wasserdampf zusammen mit dem Rauchgas das Kraftwerk verläßt. Verfahrensbedingt wird dabei die für die Verdampfung benötigte Wärme in nachteiliger Weise auf unnötig hohem Temperaturniveau zur Verfügung gestellt.

Zur Verbesserung des Wirkungsgrades derartiger Kraftwerke ist daher bereits vorgeschlagen worden, den einzusetzenden Brennstoff vor seiner Verbrennung in indirekt beheizten Wirbelbetttrocknern zu trocknen unter Verwendung des bei der Trocknung anfallenden Brüdenstromes als Trägermedium für das Wirbelbett. Bei derartigen Verfahren sind Nachteile darin zu sehen, daß aufgrund der reinen Wasserdampfatmosphäre im Trockner, d.h. also des hohen Wasserdampfpartialdruckes, die für die Trocknung benötigte Wärme auf relativ hohem Temperaturniveau zur Verfügung gestellt werden muß. Hinzu kommt ein apparativer Aufwand mit verfahrenstypischen Anlagenteilen, wie Brüdenreinigung, Brüdenverdichter, Brüdenkondensator und Brüdenkondensataufbereitung, der auch bei enger Einbindung in einen Kraftwerksprozeß nicht wesentlich abzubauen ist.

Der Erfindung liegt die Aufgabe zugrunde, ein Verfahren der eingangs genannten Art derart weiterzuentwickeln, daß ohne wesentliche Beeinträchtigung der Verfügbarkeit des Kraftwerksprozesses die Vortrocknung des eingesetzten Brennstoffes mit möglichst geringem Energie- und Apparateaufwand durchgeführt werden kann.

Diese Aufgabe wird erfindungsgemäß dadurch gelöst, daß als Trägermedium für den Wirbelbetttrockner ein Rauchgasteilstrom verwendet wird und daß das bei der Trocknung anfallende Gemisch aus Rauchgas- und Wasserdampf, ggf. nach einer Zwischenbehandlung gemeinsam mit dem Hauptrauchgasstrom entsorgt wird.

Der erfindungsgemäße Vorschlag ermöglicht ohne wesentlichen Aufwand die energetisch günstige Integration einer Trocknung des Brennstoffes in den vorhandenen Kraftwerksprozeß. Durch die Verwendung eines Rauchgasteilstromes als Trägermedium für das Wirbelbett des Trockners kann auf einfache Weise dessen ansonsten als Abwärme abzugebende Restwärme für den Trocknungsprozeß weiter genutzt werden. Darüber hinaus bewirkt die Vermischung der im Trockner anfallenden Brüden mit dem Rauchgas eine erhebliche Partialdruckabsenkung des Wasserdampfes, so daß die Trocknungswärme auf einem relativ niedrigen Temperaturniveau zur Verfügung gestellt werden kann. Als Heizmedium kann ein Niedrigtemperaturdampf, wie z.B. abgearbeiteter Anzapfdampf aus dem Wasser-Dampf-Kreislauf des Kraftwerkes, verwendet werden. Zur Einstellung des jeweils optimalen Temperaturniveaus im Trockner kann der Druck des als Heizmedium verwendeten Dampfes geregelt werden, beispielsweise durch Integration einer Gegendruckturbine in den Wasser-Dampf-Kreislauf des Kraftwerkes oder einer geregelten Entnahmekondensationsturbine.

Vorteilhafterweise wird zumindest ein Teil des im Trockner anfallenden Gemisches aus Rauchgas und Wasserdampf ohne vorherige Entstaubung in die Feuerung für die fossilen Brennstoffe rückgeführt. Dadurch entfällt zum einen die sonst erforderlich Entstaubung dieses Gasstromes und zum anderen kann der Energieinhalt der mitgeführten Brennstoffpartikel auf einfache Weise im Kraftwerksprozeß mitgenutzt werden.

Die in die Feuerung einleitbare Gasmenge aus dem Wirbelbetttrockner hängt ab sowohl von der Art der verwendeten Feuerung als auch von dem jeweiligen Lastzustand des Kraftwerksprozesses. Dabei ist zu erwarten, daß bei Einsatz der üblichen Schmelzkammerstaub- oder Trockenstaubfeuerungen eine größere Gasmenge rückgeführt werden kann als bei Einsatz einer auf niedrigerem Brennkammertemperaturniveau betriebenen statischen oder zirkulierenden Wirbelbettfeuerung.

Der aus auslegungstechnischen Gründen nicht in die Feuerung rückgeführte Rest des im Trockner anfallenden Gemisches aus Rauchgas und Wasserdampf wird nach einem weiteren Merkmal entstaubt und direkt in den Hauptrauchgasstrom des Kraftwerkes vor Rauchgasableitung eingeleitet. Ggf. kann aber auch das gesamte Rauchgas-Wasserdampf-Gemisch entstaubt und in den Hauptrauchgasstrom eingeleitet werden

Die Verfügbarkeit des Kraftwerkes wird durch die vorgeschlagene Art der Trocknung kaum beeinträchtigt, da die Hauptgaswege mit den üblichen Anlagenkomponenten nach wie vor in bekannter Weise zur Verfügung stehen und durch die vorgeschlagene Art der Trocknung des Brennstoffes nicht beeinflußt werden.

Die Erfindung bezieht sich in erster Linie auf die Trocknung einer als Brennstoff für einen Kraftwerksprozeß vorgesehenen Braunkohle. Sie kann selbstverständlich auch auf andere fossile Brennstoffe mit hohem Wassergehalt angewandt werden.

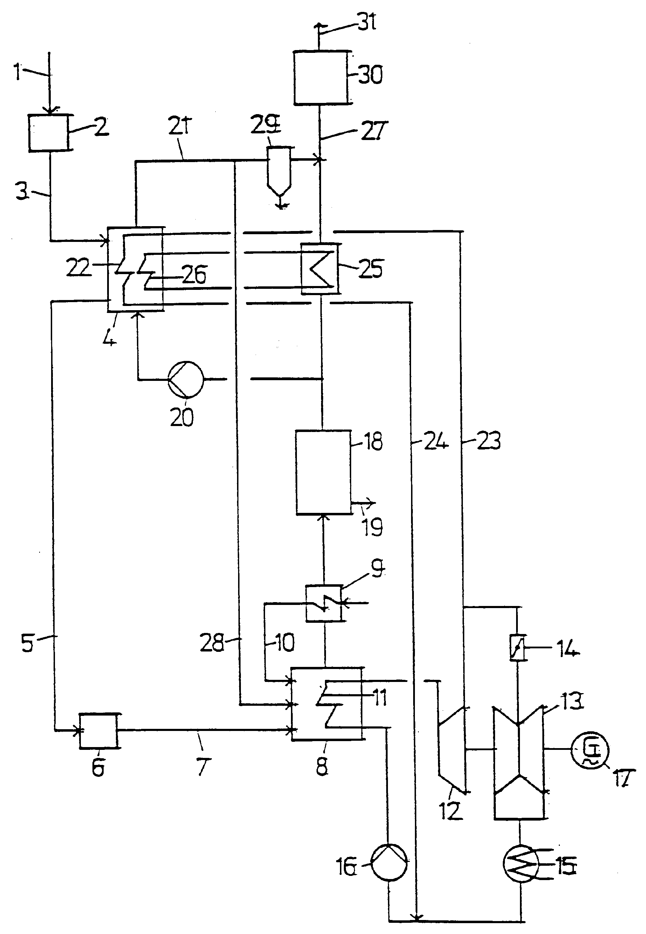

Weiteie Erläuterungen sind dem in der Figur schematisch dargestellten Ausführungsbeispiel zu entnehmen.

Gemäß dem in der Figur schematisch dargestellten Kraftwerksprozeß wird Rohbraunkohle mit einem Wassergehalt bis zu 50 % und mehr über eine Leitung 1 zunächst einem Brecher oder einer Mühle 2 und dann über Leitung 3 einem Wirbelbetttrockner 4 zugeführt und in diesem bis zu einem Restwassergehalt unter 20 % getrocknet. Die getrocknete Braunkohle wird über eine Leitung 5 abgezogen, erforderlichenfalls in einer zweiten Kohlemühle 6 auf das für die Feuerung erforderliche Kornband zerkleinert und dann über eine Leitung 7 in einen Kraftwerkskessel 8 eingespeist und in diesem verbrannt. Die benötigte Verbrennungsluft wird nach ihrer Vorwärmung im Wärmetausch mit heißen Rauchgasen in einem Wärmetauscher 9 über eine Leitung 10 in den Kessel eingeleitet. Die in Kessel 8 anfallende Verbrennungswärme wird über Heizflächen 11 auf den Wasser-Dampf-Kreislauf des Kraftwerkes mit Turbinenstufen 12 und 13, einem Kondensator 15, einer Speisewasserpumpe 16 und einem Generator 17 übertragen.

Die den Kraftwerkskessel 8 verlassenden Rauchgase werden zunächst im Wärmetauscher 9 auf eine Temperatur zwischen etwa 130 und 150°C abgekühlt und dann in einem Elektrofilter 18 mit einem Ascheaustrag 19 entstaubt.

Ein Teilstrom des entstaubten Rauchgases wird erfindungsgemäß mittels eines Gebläses 20 als Trägergas für das Wirbelbett dem Wirbelbetttrockner 4 zugeführt. Dabei wird die Rauchgasteilstrommenge ausschließlich nach dem Bedarf des Wirbeltrockners 4, z.B. mit dem Gebläse 20, geregelt bzw. eingestellt. Zweckmäßigerweise ist der Trockner so ausgelegt, daß die auf dem niedrigsten Lastniveau des Kraftwerkes anfallende Rauchgasmenge noch für den Betrieb des Wirbelbetttrockners ausreicht. Auf diese Weise kann der Wirbelbetttrockner unabhängig von dem jeweiligen Lastbereich des Kraftwerkblockes gefahren werden.

Innerhalb des Wirbelbettes kühlt sich der Rauchgasteilstrom im direkten Wärmetausch mit der zu trocknenden Braunkohle auf die Bettemperatur von etwa 60° C ab und verläßt dann zusammen mit den anfallenden Brüden den Trockner 4 über eine Leitung 21. Da das Gemisch aus Rauchgas und Brüden zwangsläufig brennbare Bestandteile aus dem Wirbelbett des Trockners mitführt, wird ein Teilstrom über eine Leitung 28 unmittelbar der Feuerung des Kessels 8 zugeführt. Das Volumen dieses Teilstromes ist dabei abhängig von Vorgaben aus der Kesselauslegung und dem Kesselbetrieb. Der Reststrom des Gemisches aus Rauchgas und Brüden wird in einem Zyklon oder Brüdenfilter 29 entstaubt und dann in die Leitung 27 des Hauptrauchgasstromes eingespeist. In einem hier nur schematisch dargestellten Anlagenteil 30 wird das Rauchgas von Schadstoffen, wie $SO_2$ und gegebenenfalls $NO_x$, befreit und dann über eine Leitung 31 hier nicht dargestellten Einrichtungen zur Ableitung in die Atmosphäre zugeführt.

Etwa 5 - 10 % der Trocknungswärme wird dem Trockner 4 über den Rauchgasteilstrom zugeführt. Die restlichen 90 - 95 % werden über ein Wärmetauschersystem 22 eingekoppelt. Hierzu wird der Turbinenstufe 12 über eine Leitung 23 bereits weitestgehend abgearbeiteter Anzapfdampf entnommen, im Wärmetauschersystem 22 kondensiert und über eine Leitung 24 erneut in den Dampf-Wasser-Kreislauf des Kraftwerkes eingespeist. Die aus der Turbinenstufe 12 verbleibende Dampfmenge wird über eine Drosselklappe der zweiten Turbinenstufe 13 zugeleitet. Dabei kann über die Drosselklappe 14 der Druck des über Leitung 23 abgezogenen Dampfes geregelt werden.

Die Verwendung von Rauchgas als Trägermedium für das Wirbelbett bewirkt im Trockner eine Absenkung des Wasserdampfpartialdruckes auf bis zu 0,5 bar. Diese Partialdruckabsenkung führt zu dem erheblichen Vorteil, daß bezogen auf den Wasserdampf die Trocknung praktisch im "Vakuum" und somit bei besonders niedrigen Temperaturen durchgeführt wird, mit der Folge, daß der als Heizmedium eingesetzte Turbinenentnahmedampf nahe dem kalten Ende der Turbine mit relativ geringen Auswirkungen auf die Turbinenleistung entnommen werden kann.

Nach einer weiteren, in der Figur eingezeichneten Variante des Verfahrens ist es auch ohne weiteres möglich, über einen Zwischenwärmeträgerkreislauf Restwärme des Hauptrauchgasstromes dem Trocknungsprozeß zuzuführen. Hierzu wird der Rauchgasstrom in einem Wärmetauscher 25 gegen einen geeigneten Wärmeträger abgekühlt, der dann in einem weiteren in dem Wirbelbett des Trockners 4 angeordneten Wärmetauscher 26 die aufgenommene Wärme an das zu trocknende Gut wieder abgibt.

## Patentansprüche

1. Verfahren zur Erzeugung elektrischer Energie und/oder Heiz- und Prozeßwärme durch Nutzung der Verbrennungswärme von fossilen, vor der Verbrennung in einem indirekt beheizten Wirbelbetttrockner getrockneten Brennstoffen, insbesondere von Rohbraunkohle, wobei die anfallenden Rauchgase im Wärmetausch mit Arbeitsmitteln und Verbrennungsluft auf ein Zwischentemperaturniveau abgekühlt, entstaubt, ggf. von weiteren Schadstoffen befreit und dann in die Atmosphäre abgegeben werden, dadurch gekennzeichnet, daß als Trägermedium für den Wirbelbetttrockner ein bereits entstaubter Rauchgasteilstrom verwendet wird und daß das bei der Trocknung anfallende Gemisch aus Rauchgas und Wasserdampf, ggf. nach einer Zwischenbehandlung, gemeinsam mit dem Hauptrauchgasstrom entsorgt wird.

2. Verfahren nach Anspruch 1, dadurch gekennzeichnet, daß zumindest ein Teil des Gemisches-aus Rauchgas und Wasserdampf ohne vorherige Entstaubung der Feuerung für die fossilen Brennstoffe zugeführt wird.

3. Verfahren nach Anspruch 1 oder 2, dadurch gekennzeichnet, daß zumindest ein Teil des Gemisches aus Rauchgas und Wasserdampf entstaubt und unmittelbar in den Hauptrauchgasstrom eingeleitet wird.

4. Verfahren nach einem der Ansprüche 1 bis 3, dadurch gekennzeichnet, daß der als Trägermedium verwendete Rauchgasteilstrom regel- oder einstellbar ist in Abhängigkeit von dem Bedarf des Wirbelbetttrockners.

5. Verfahren nach einem der Ansprüche 1 bis 4, dadurch gekennzeichnet, daß die indirekte Beheizung des Wirbelbetttrockners zumindest teilweise mittels Niedrigtemperaturdampf erfolgt.

6. Verfahren nach Anspruch 5, dadurch gekennzeichnet, daß der Druck des für die indirekte Beheizung des Wirbelbetttrockners verwendeten Dampfes regelbar ist.

7. Verfahren nach den Ansprüchen 5 oder 6, dadurch gekennzeichnet, daß für die indirekte Beheizung des Wirbelbetttrockners in einer Gegendruckturbine entspannter Dampf aus dem Kraftwerksprozeß verwendet wird.

8. Verfahren nach den Ansprüchen 5 oder 6, dadurch gekennzeichnet, daß für die indirekte Beheizung des Wirbelbetttrockners weitgehend entspannter Dampf aus einer Entnahme einer Kondensationsturbine oder einer Entnahmekondensationsturbine verwendet wird.

9. Verfahren nach Anspruch 7, dadurch gekennzeichnet, daß der Dampfdruck an der Entnahmestelle durch ein Stellglied, z.B. eine Drosselklappe im Weg des verbleibenden Dampfstromes, geregelt oder eingestellt wird.

10. Verfahren nach einem der Ansprüche 1 bis 9, dadurch gekennzeichnet, daß über einen Zwischenwärmeträgerkreislauf Wärme aus dem verbleibenden Hauptrauchgasstrom in den Wirbelbetttrockner eingekoppelt wird.

**Revendications**

1. Procédé pour produire de l'énergie électrique et/ou de la chaleur de chauffage et de la chaleur industrielle en utilisant la chaleur de combustion de combustibles fossiles séchés avant la combustion dans un séchoir à lit chauffé indirectement, en particulier de lignite cru, les gaz de fumée résultants étant refroidis en échange de chaleur avec des moyens de travail et de l'air de combustion jusqu'à un niveau intermédiaire de température, dépoussiérés, le cas échéant libérés d'autres éléments polluants et ensuite dégagés dans l'atmosphère, caractérisé en ce qu'on utilise, comme agent de support pour le séchoir à lit fluidisé, un courant partiel de gaz de fumée déjà dépoussiéré et qu'on évacue le mélange de gaz de fumée et de vapeur d'eau résultant lors du séchage, le cas échéant après un traitement intermédiaire, en même temps que le courant principal de gaz de fumée.

2. Procédé selon la revendication 1, caractérisé en ce qu'on amène au combustible pour les combustibles fossiles au moins une partie du mélange de gaz de fumée et de vapeur d'eau sans dépoussiérage préalable.

3. Procédé selon la revendication 1 ou 2, caractérisé en ce qu'on dépoussière au moins une partie du mélange de gaz de fumée et de vapeur d'eau et on l'introduit directement dans le courant principal de gaz de fumée.

4. Procédé selon l'une des revendications 1 à 3, caractérisé en ce que le courant partiel de gaz de fumée utilisé comme agent de support est ajustable ou réglable en fonction du besoin du séchoir à lit fluidisé.

5. Procédé selon l'une des revendications 1 à 4, caractérisé en ce que le chauffage indirect du séchoir à lit fluidisé se produit au moins partiellement au moyen de vapeur à basse température.

6. Procédé selon la revendication 5, caractérisé en ce que la pression de la vapeur utilisée pour le chauffage indirect du séchoir à lit fluidisé est ajustable.

7. Procédé selon les revendications 5 ou 6, caractérisé en ce qu'on utilise, pour le chauffage indirect du séchoir à lit fluidisé, de la vapeur détendue dans une turbine à contre-pression et provenant de l'usine électrique industrielle.

8. Procédé selon les revendications 5 ou 6, caractérisé en ce qu'on utilise, pour le chauffage indirect du séchoir à lit fluidisé, de la vapeur largement détendue provenant du soutirage d'une turbine à condensation ou d'une turbine à condensation à soutirage.

9. Procédé selon la revendication 7, caractérisé en ce que la pression de vapeur à l'emplacement de soutirage est ajustée ou réglée par un organe de réglage, par exemple un clapet d'étranglement dans le chemin du courant de vapeur restant.

10. Procédé selon l'une des revendications 1 à 9, caractérisé en ce qu'on accouple, par l'intermédiaire d'une circulation intermédiaire d'un support de chaleur, de la chaleur hors du courant principal de gaz de fumée restant, dans le séchoir à lit fluidisé.

## Claims

1. A method of generating electrical energy and/or heating and process heat by using the combustion heat of fossile, particularly raw lignite, which prior to combustion is dried in an indirectly heated fluidised bed drier, the flue gases arising being cooled in heat exchange with working media and combustion area to an intermediate temperature level and then cleansed of dust, possibly cleansed of any further pollutants and then delivered into the atmosphere, characterised in that as a carrier medium for the fluidised bed drier a partial flow of flue gas already cleansed of dust is used and in that the mixture of flue gas and water vapour occurring during drying, possibly after an intermediate treatment, is removed jointly with the main flow of flue gas.

2. A method according to Claim 1, characterised in that at least a part of the mixture of flue gas and water vapour is, without prior dust elimination, fed to the means of firing the fossile fuels.

3. A method according to Claim 1 or 2, characterised in that at least a part of the mixture of flue gas and water vapour is cleansed of dust and then fed directly into the main flue gas flow.

4. A method according to one of Claims 1 to 3, characterised in that the partial flow of flue gas used as a carrier medium is adapted to be regulated or adjusted as a function of the needs of the fluidised bed drier.

5. A method according to one of Claims 1 to 4, characterised in that the indirect heating of the fluidised bed drier occurs at least partially by means of low temperature vapour.

6. A method according to Claim 5, characterised in that the pressure of the vapour used for indirect heating of the fluidised bed drier is regulable.

7. A method according to Claims 5 or 6, characterised in that vapour from the power station process, expanded in a counter-pressure turbine is used for indirect heating of the fluidised bed drier.

8. A method according to Claims 5 or 6, characterised in that largely de-pressurised vapour from the draw-off from a condensation turbine or a bleeding turbine is used for the indirect heating of the fluidised bed drier.

9. A method according to Claim 7, characterised in that the steam pressure at the draw-off point is regulated or adjusted by a positioning member, e.g. a throttle valve in the path of the remaining vapour flow.

10. A method according to one of Claims 1 to 9, characterised in that heat from the remaining main flue gas flow into the fluidised bed drier is looped via an intermediate heat carrier circuit.